# EUROPEAN PATENT APPLICATION

(11) **EP 3 979 694 A1**
(43) Date of publication of application: **06.04.2022**
(21) Application number: 19931659.7
(22) Date of filing: 03.06.2019
(51) Int. Cl.: H04W 28/04, H04W 4/46, H04W 92/18

(54) **TERMINAL**

(71) Applicant: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Yanru, Beijing, 100190 (CN)
(74) Representative: Hoffmann Eitle
(86) International application number: PCT/JP2019/022059
(87) International publication number: WO 2020/245895

(57) **Abstract**

A terminal includes a transmitting unit transmitting data to a plurality of other terminals via a physical shared channel arranged in a resource pool; a control unit identifying a resource in which a channel used for transmitting and receiving a response relating to retransmission control corresponding to the data is arranged; and a receiving unit receiving, from another terminal among the plurality of other terminals, the response relating to the retransmission control corresponding to the data, in the identified resource, wherein the control unit determines at least one terminal among the plurality of other terminals from which the response relating to the retransmission control is to be transmitted, in a case where the response relating to the retransmission control includes an affirmative/negative response and a number of the plurality of other terminals is greater than a number of the resources in which the channel is arranged.

## Description

### [Technical Field]

The present invention relates to a terminal in a radio communication system.

### [Background Art]

In LTE (Long Term Evolution) and successor systems of LTE (for example, LTE-A (LTE Advanced) and NR (New Radio) (also referred to as 5G)), a D2D (Device to Device) technology in which terminals directly communicate with each other without involving a base station, is being studied (for example, Non-Patent Literature 1).

D2D reduces the traffic between the terminal and the base station, and enables communication between the terminals even when the base station becomes unable to communicate in the event of a disaster, etc. Note that in 3GPP (3rd Generation Partnership Project), D2D is referred to as "sidelink"; however, in the present specification, D2D, which is a more general term, is used. However, sidelink is also used as necessary in the description of the embodiment to be described later.

D2D communication is generally classified into D2D discovery (also referred to as D2D detection) for finding other communicable terminals and D2D communication (also referred to as D2D direct communication, inter-terminal direct communication, etc.) for terminals to directly communicate with each other. In the following description, when D2D communication, D2D discovery, etc., are not particularly distinguished, these may be simply referred to as D2D. Further, a signal transmitted and received by D2D is referred to as a D2D signal. Various usage cases of services related to V2X (Vehicle to Everything) in NR have been studied (for example, Non-Patent Literature 2).

### [Citation List]

### [Non-Patent Literature]

[NPTL 1] 3GPP TS 36.211 V15.5.0(2019-03)
[NPTL 2] 3GPP TR 22.886 V15.1.0(2017-03)

### [Summary of Invention]

### [Technical Problem]

In direct communication between terminals in NR-V2X, support of HARQ (Hybrid automatic repeat request) in groupcast is being studied. On the other hand, there have been no specifications of a resource in which the PSFCH (Physical Sidelink Feedback Channel), used for transmitting and receiving HARQ responses corresponding to the PSSCH (Physical Sidelink Shared Channel) used in groupcast, is arranged.

The present invention has been made in view of the above points, and an object of the present invention is to appropriately transmit and receive a response related to retransmission control in direct communication between terminals.

### [Solution to Problem]

According to the disclosed technology, there is provided a terminal including a transmitting unit configured to transmit data to a plurality of other terminals via a physical shared channel arranged in a resource pool; a control unit configured to identify a resource in which a channel, which is used for transmitting and receiving a response relating to retransmission control corresponding to the data, is arranged; and a receiving unit configured to receive, from another terminal among the plurality of other terminals, the response relating to the retransmission control corresponding to the data, in the identified resource, wherein the control unit determines at least one terminal among the plurality of other terminals from which the response relating to the retransmission control is to be transmitted, in a case where the response relating to the retransmission control includes an affirmative response or a negative response and a number of the plurality of other terminals is greater than a number of the resources in which the channel is arranged.

### [Advantageous Effects of Invention]

According to the disclosed technology, it is possible to appropriately transmit and receive a response related to retransmission control in direct communication between terminals.

### [Brief Description of Drawings]

FIG. 1 is a diagram for describing V2X.
FIG. 2 is a diagram illustrating an example (1) of a transmission mode of V2X.
FIG. 3 is a diagram illustrating an example (2) of a transmission mode of V2X.
FIG. 4 is a diagram illustrating an example (3) of a transmission mode of V2X.
FIG. 5 is a diagram illustrating an example (4) of a transmission mode of V2X.
FIG. 6 is a diagram illustrating an example (1) of a communication type of V2X.
FIG. 7 is a diagram illustrating an example (2) of a communication type of V2X.
FIG. 8 is a diagram illustrating an example (3) of a communication type of V2X.
FIG. 9 is a flowchart for describing an example of a HARQ response in V2X.
FIG. 10 illustrates an example of groupcast according to an embodiment of the present invention.
FIG. 11 illustrates an example (1) of a channel arrangement according to an embodiment of the present invention.
FIG. 12 illustrates an example (2) of a channel arrangement according to an embodiment of the present invention.
FIG. 13 is a diagram illustrating an example of a functional configuration of a base station 10 according to the embodiment of the present invention.
FIG. 14 is a diagram illustrating an example of a functional configuration of a terminal 20 according to the embodiment of the present invention.
FIG. 15 is a diagram illustrating an example of a hardware configuration of the base station 10 or the terminal 20 according to the embodiment of the present

### [Description of embodiment]

Hereinafter, an embodiment of the present invention will be described with reference to the drawings. Note that the embodiment described below is merely an example, and embodiments to which the present invention is applied are not limited to the following embodiment.

In the operation of the radio communication system according to an embodiment of the present invention, the existing technology is appropriately used. The existing technology is, for example, existing LTE; however, the existing technology is not limited to existing LTE. Furthermore, the term "LTE" used in the present specification shall have a broad meaning including LTE-Advanced and methods after LTE-Advanced (e.g., NR) or wireless LAN (Local Area Network) unless otherwise specified.

Furthermore, in the present embodiment, the duplex method may be the TDD (Time Division Duplex) method, the FDD (Frequency Division Duplex) method, or other methods (for example, the Flexible Duplex method).

Furthermore, in the embodiment of the present invention, the radio parameter, etc., being "configured" means that a predetermined value is "pre-configured", or a radio parameter, which is reported from the base station 10 or a terminal 20, is configured.

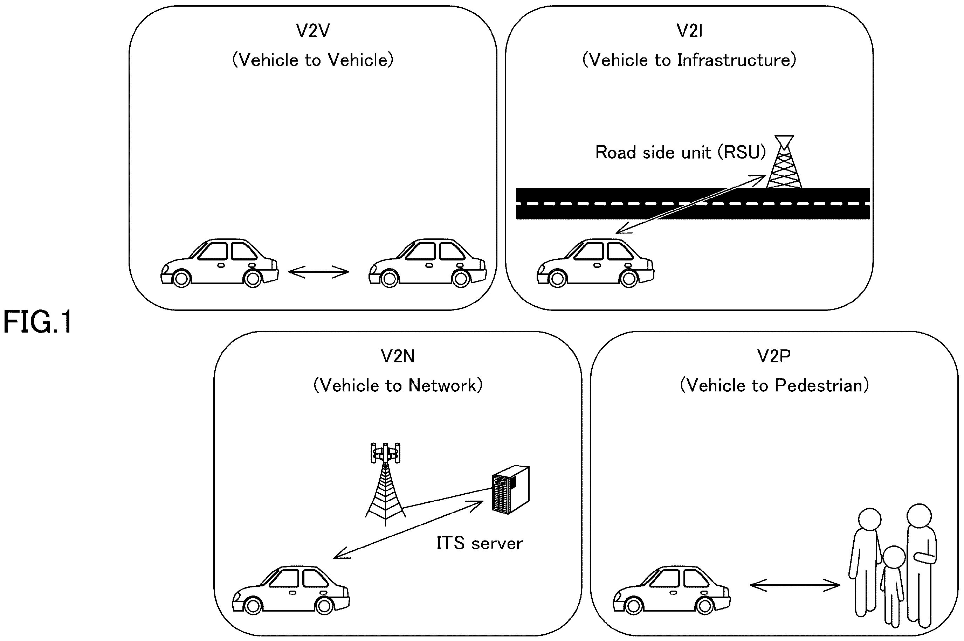

FIG. 1 is a diagram for describing V2X. In 3GPP, studies are being made to realize V2X (Vehicle to Everything) or eV2X (enhanced V2X) by extending the D2D function, and specifications of V2X are being made. As illustrated in FIG. 1, V2X is a part of ITS (Intelligent Transport Systems), and V2X is a collective term of V2V (Vehicle to Vehicle) meaning a communication mode implemented between vehicles, V2I (Vehicle to Infrastructure) meaning a communication mode implemented between a vehicle and a road-side unit (RSU) installed at the side of a road, V2N (Vehicle to Network) meaning a communication mode implemented between a vehicle and an ITS server, and V2P (Vehicle to Pedestrian) meaning a communication mode implemented between a vehicle and a mobile terminal of a pedestrian.

Furthermore, in 3GPP, V2X using cellular communication and inter-terminal communication of LTE or NR is being studied. V2X using cellular communication is also referred to as cellular V2X. In V2X of NR, studies are in progress for implementing larger capacity, low delay, high reliability, and QoS (Quality of Service) control.

For V2X of LTE or NR, it is assumed that studies not limited to the 3GPP specification, will be advanced. For example, it is assumed that securing interoperability, reducing costs by implementing an upper layer, a method of using a plurality of RATs (Radio Access Technology) in combination or a method of switching the RATs, addressing regulations in each country, acquiring and distributing data of a V2X platform of LTE or NR, and managing and using a database, will be studied.

In the embodiments of the present invention, a mode in which a communication apparatus is installed in a vehicle is mainly assumed; however, the embodiment of the present invention is not limited to such a mode. For example, the communication apparatus may be a terminal held by a person, or the communication apparatus may be an apparatus installed in a drone or an aircraft, or the communication apparatus may be a base station, an RSU, a relay station (relay node), or a terminal having a scheduling capability, etc.

Note that SL (Sidelink) may be distinguished based on either UL (Uplink) or DL (Downlink) or one of or a combination of the following 1)-4). Furthermore, the SL may be another name.
1) Resource allocation in time domain
2) Resource allocation in the frequency domain
3) Synchronization signals (including SLSS (Sidelink Synchronization Signal)) to be referred to
4) Reference signals used for path loss measurement for transmission power control

Further, with respect to OFDM (Orthogonal Frequency Division Multiplexing) of SL or UL, any one of CP-OFDM (Cyclic-Prefix OFDM), DFT-S-OFDM (Discrete Fourier Transform-Spread-OFDM), OFDM not subjected to transform precoding, or OFDM subjected to transform precoding may be applied.

In SL of LTE, Mode 3 and Mode 4 are specified with respect to resource allocation for SL to the terminal 20. In Mode 3, transmission resources are dynamically allocated by DCI (Downlink Control Information) transmitted from the base station 10 to the terminal 20. Furthermore, in Mode 3, SPS (Semi Persistent Scheduling) is also possible. In Mode 4, the terminal 20 autonomously selects a transmission resource from the resource pool.

Note that a slot in embodiments of the present invention may be read as a symbol, a minislot, a subframe, a wireless frame, and a TTI (Transmission Time Interval). Further, a cell in embodiments of the present invention may be read as a cell group, a carrier component, a BWP, a resource pool, a resource, RAT (Radio Access Technology), a system (including wireless LAN), and the like.

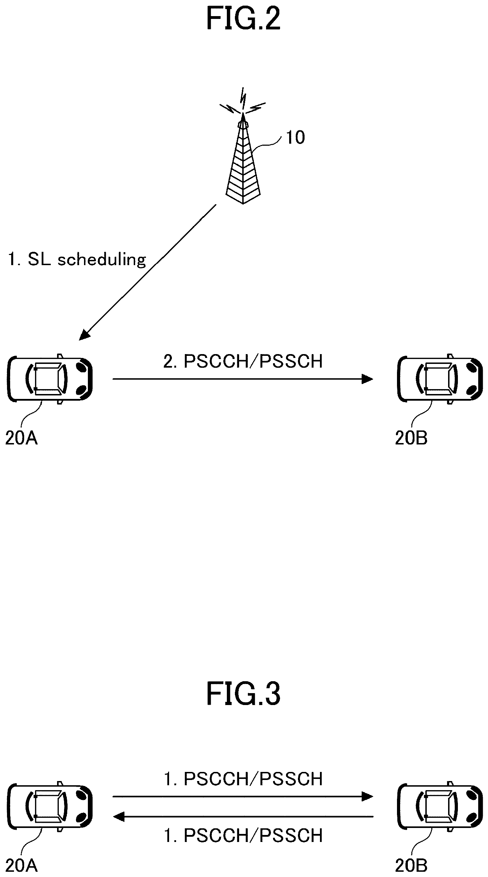

FIG. 2 is a diagram for describing an example (1) of a transmission mode of V2X. Note that a transmission mode can be read as a resource allocation mode. In the transmission mode of sidelink communication illustrated in FIG. 2, in step 1, a base station 10 transmits the sidelink scheduling to a terminal 20A. Subsequently, the terminal 20A transmits PSCCH (Physical Sidelink Control Channel) and PSSCH (Physical Sidelink Shared Channel) to a terminal 20B based on the received scheduling (step 2). The transmission mode of the sidelink communication illustrated in FIG. 2 may be referred to as a sidelink transmission mode 3 in LTE. In the sidelink transmission mode 3 in LTE, Uu-based sidelink scheduling is performed. Uu is a wireless interface between UTRAN (Universal Terrestrial Radio Access Network) and UE (Terminal). Note that the transmission mode of the sidelink communication illustrated in FIG. 2 may be referred to as a sidelink transmission mode 1 in the NR.

FIG. 3 is a diagram for describing an example (2) of a transmission mode of V2X. In the transmission mode for sidelink communication illustrated in FIG. 3, in step 1, the terminal 20A transmits PSCCH and PSSCH to the terminal 20B by using an autonomously selected resource. Similarly, the terminal 20B transmits PSCCH and PSSCH to the terminal 20A by using an autonomously selected resource (step 1). The transmission mode of the sidelink communication illustrated in FIG. 3 may be referred to as a sidelink transmission mode 2a in the NR. In the sidelink transmission mode 2 in the NR, the UE itself performs the resource selection.

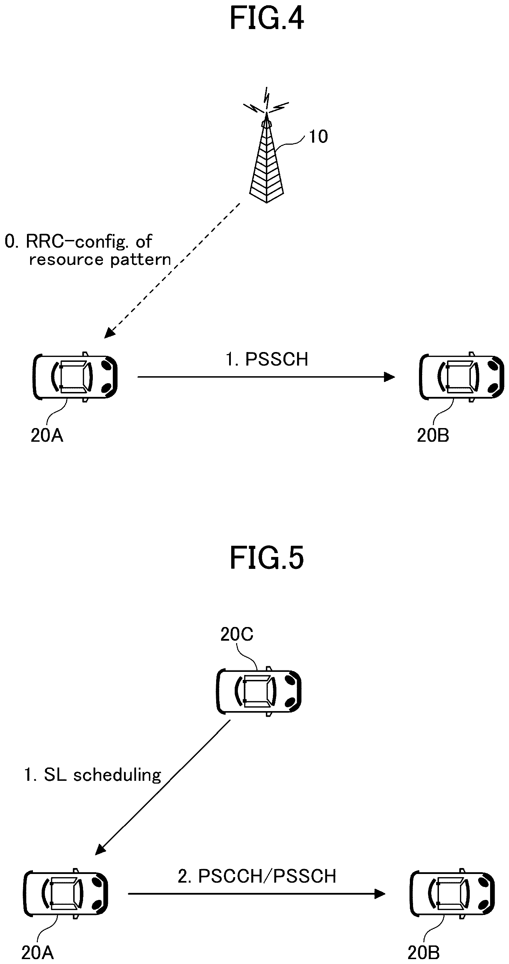

FIG. 4 is a diagram for describing an example (3) of a transmission mode of V2X. In the transmission mode of the sidelink communication illustrated in FIG. 4, in step 0, a resource pattern of sidelink is configured (in advance) in the terminal 20A. Subsequently, the terminal 20A transmits the PSSCH to the terminal 20B based on the received resource pattern (step 1). The transmission mode of the sidelink communication illustrated in FIG. 4 may be referred to as a sidelink transmission mode 2c in the NR.

FIG. 5 is a diagram for describing an example (4) of a transmission mode of V2X. In the transmission mode of the sidelink communication illustrated in FIG. 5, in step 1, a terminal 20C transmits the sidelink scheduling to the terminal 20A via the PSCCH. Subsequently, the terminal 20A transmits the PSSCH to the terminal 20B based on the received scheduling (step 2). The transmission mode of the sidelink communication illustrated in FIG. 5 may be referred to as a sidelink transmission mode 2d in the NR.

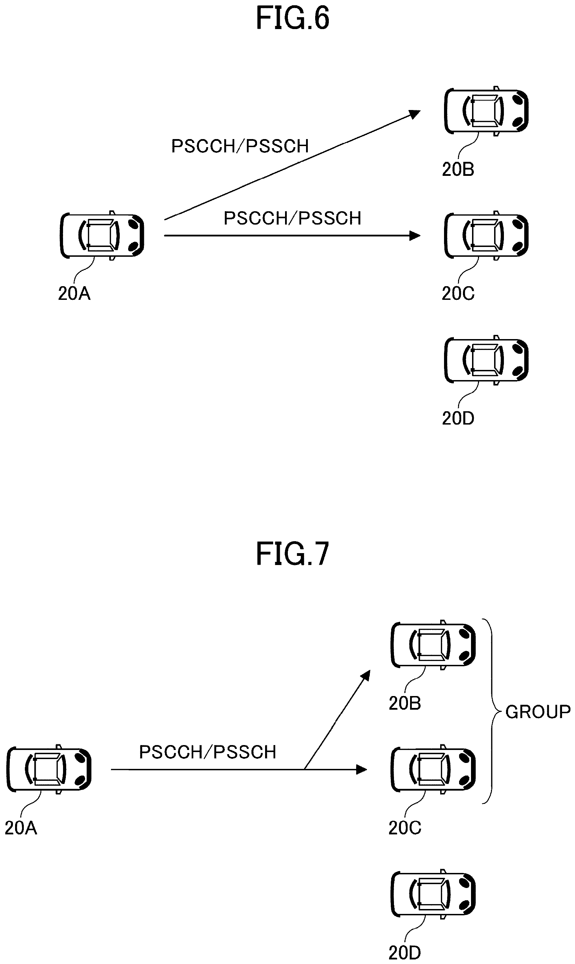

FIG. 6 is a diagram for describing an example (1) of a communication type of V2X. The sidelink communication type illustrated in FIG. 6 is unicast. The terminal 20A transmits PSCCH and PSSCH to the terminal 20. In the example illustrated in FIG. 6, the terminal 20A performs unicast transmission to the terminal 20B and performs unicast transmission to the terminal 20C.

FIG. 7 is a diagram for describing an example (2) of a communication type of V2X. The sidelink communication type illustrated in FIG. 7 is a groupcast. The terminal 20A transmits PSCCH and PSSCH to a group to which one or more of the terminals 20 belong. In the example illustrated in FIG. 7, the group includes the terminal 20B and the terminal 20C, and the terminal 20A performs groupcast transmission to the group.

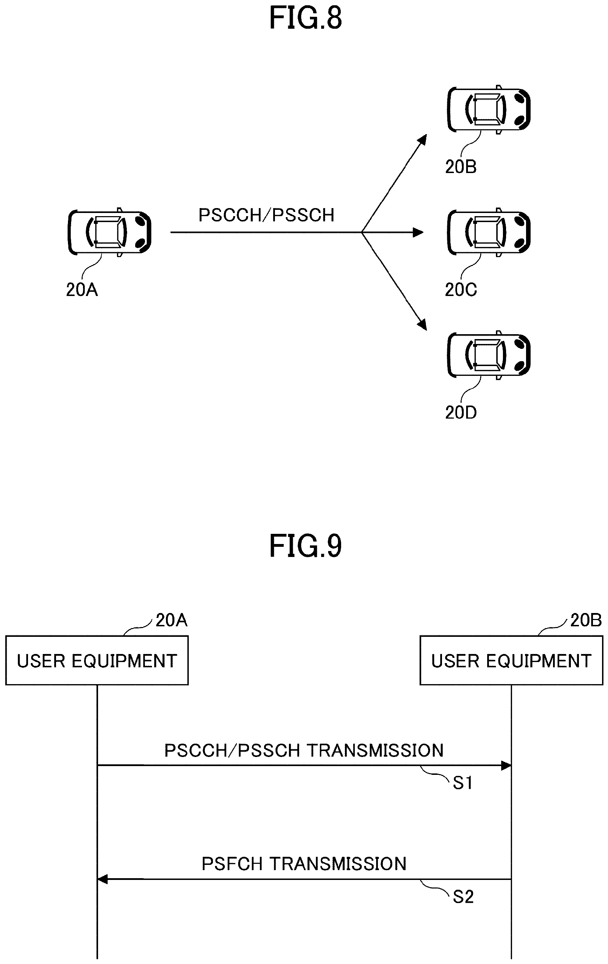

FIG. 8 is a diagram for describing an example (3) of a communication type of V2X. The sidelink communication type illustrated in FIG. 8 is broadcast. The terminal 20A transmits PSCCH and PSSCH to one or more of the terminals 20. In the example illustrated in FIG. 8, the terminal 20A performs broadcast transmission to the terminal 20B, the terminal 20C, and a terminal 20D.

FIG. 9 is a flowchart illustrating an example of a HARQ response in V2X. As illustrated in FIG. 9, in step S1, the terminal 20A transmits PSCCH and PSSCH to the terminal 20B. Subsequently, the terminal 20B transmits, to the terminal 20A, a PSFCH (Physical Sidelink Feedback Channel) including a HARQ response corresponding to the received PSSCH.

In NR-V2X, HARQ is supported in PSCCH and PSSCH of unicast or groupcast. In unicast and groupcast, HARQ feedback and HARQ combining are supported at the physical layer. Further, in NR-V2X, SFCI (Sidelink Feedback Control Information) that includes a HARQ response is defined. In SFCI, at least one SFCI format that includes a HARQ response corresponding to PSSCH, is applied.

With respect to a HARQ response in groupcast of NR-V2X, there is an option 1 of transmitting only NACK by the receiving terminal 20 and an option 2 of transmitting ACK or NACK by the receiving terminal 20. For example, in the case of option 1, all of the receiving terminals 20 may share one PSFCH, some of the receiving terminals 20 may share one PSFCH, and all of the receiving terminals 20 or some of the receiving terminals 20 may share one pool of PSFCH. For example, in the case of option 2, each receiving terminal 20 may use a separate PSFCH for transmitting ACK or NACK. Further, in the case of option 2, all of the receiving terminals 20 or some of the receiving terminals 20 may share one PSFCH for transmitting ACK, and may share another one PSFCH for transmitting NACK. Note that a PSFCH resource may be mapped to one or more domains among the time domain, the frequency domain, and the code domain. Hereinafter, "option 1" may mean the above-described option 1 of a HARQ response in groupcast, and "option 2" may mean the above-described option 2 of a HARQ response in groupcast.

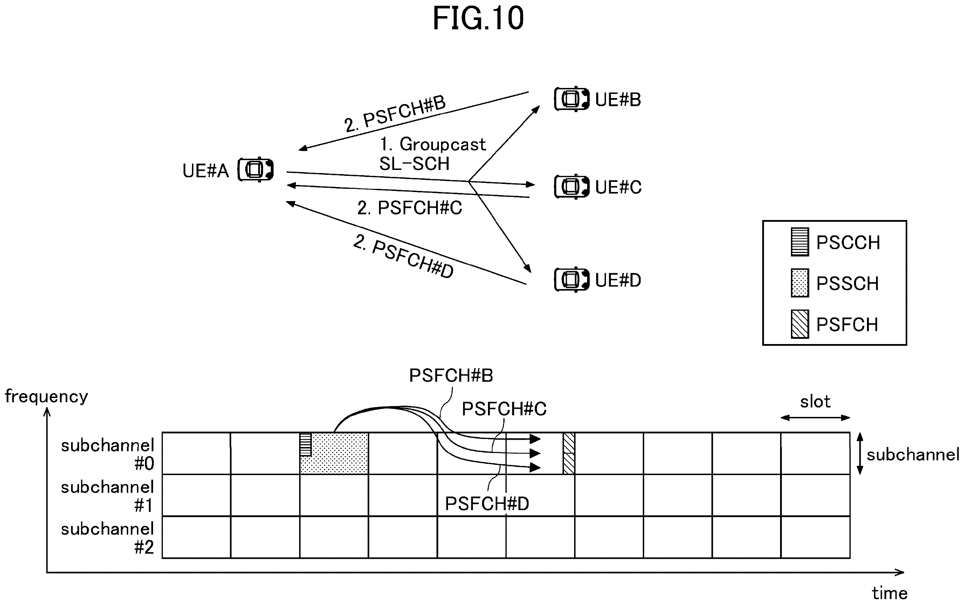

FIG. 10 is a diagram illustrating an example of groupcast according to an embodiment of the present invention. As described above, in sidelink of NR, transmission of HARQ responses by PSFCH, is supported. Note that as the format of PSFCH, the same format as that of PUCCH (Physical Uplink Control Channel) format 0 can be used. That is, with respect to the PSFCH format, the size of the PRB (Physical Resource Block) is 1, and the PSFCH format may be a sequence-based format in which ACK and NACK are identified by the difference in the sequence. The format of PSFCH is not limited thereto. The resource of PSFCH may be arranged in the trailing symbol or a plurality of trailing symbols of a slot. Further, a period N is configured or specified (in advance) in the PSFCH resource. The period N may be configured or specified (in advance) in units of slots.

In FIG. 10, the vertical axis corresponds to the frequency domain and the horizontal axis corresponds to the time domain. The PSCCH may be arranged in one symbol at the beginning of the slot, or may be arranged in a plurality of symbols at the beginning of the slot, or may be arranged in a plurality of symbols from a symbol other than the symbol at the beginning of the slot. The PSFCH may be arranged in one symbol at the end of the slot, or may be arranged in a plurality of symbols at the end of the slot. In the example illustrated in FIG. 10, three subchannels are configured in the resource pool, and two PSFCHs are arranged in the third slot after the slot in which PSSCH is arranged. The arrow from PSSCH to PSFCH indicates an example of PSFCH associated with PSSCH.

When a HARQ response in the NR-V2X groupcast is of the option 2 of transmitting ACK or NACK, the resource used for transmitting and receiving PSFCH needs to be determined. As illustrated in FIG. 10, in step 1, the transmission side terminal 20 that is a UE#A, executes groupcast to the receiving side terminals 20 that are a UE#B, a UE#C, and a UE#D, via SL-SCH. In the subsequent step 2, the UE#B uses PSFCH#B, the UE#C uses PSFCH#C, and the UE#D uses PSFCH#D to transmit a HARQ response to the UE#A. Here, as illustrated in the example of FIG. 10, when the number of PSFCH resources that are available for usage is less than the number of the receiving terminals 20 belonging to the group, it is necessary to determine how to allocate PSFCH resources. Note that the number of the receiving terminals 20 in the groupcast, may be known to the transmitting terminal 20.

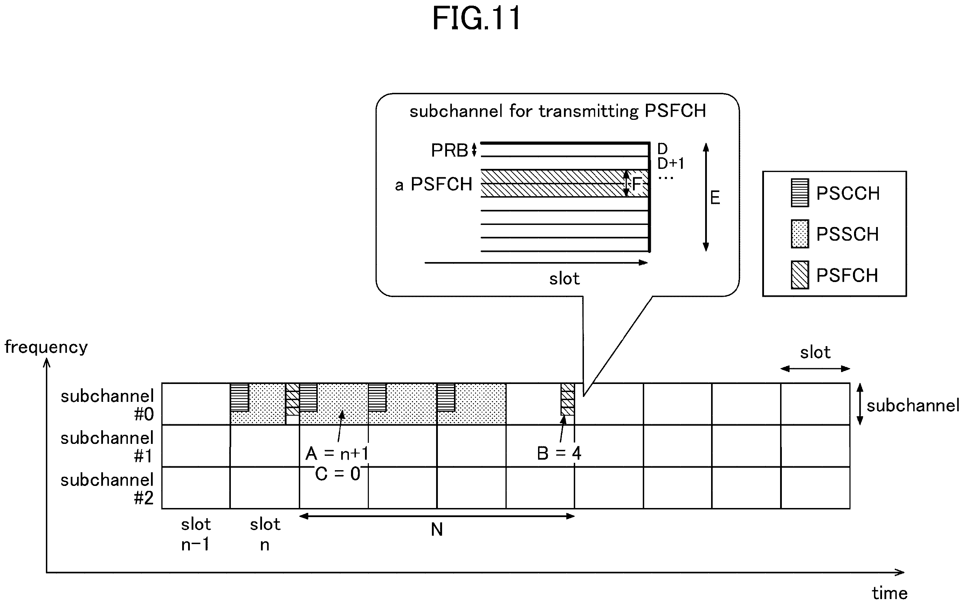

FIG. 11 is a diagram illustrating an example (1) of a channel arrangement according to an embodiment of the present invention. In the example illustrated in FIG. 11, three subchannels are configured in the resource pool, and four PSFCHs are arranged in the fourth slot, the third slot, the second slot, and the first slot after a slot in which PSSCH is arranged. The period of arranging PSFCH is four slots. The arrow from PSSCH to PSFCH indicates an example of PSFCH associated with PSSCH.

When option 2, in which a HARQ response transmits ACK or NACK in NR-V2X groupcast, is configured or reported (for example, in the case of an information element (e.g., upper layer parameter) FeedbackType Groupcast='type2'), the PSFCH resource identified in the time domain, the frequency domain, and the code domain may be determined by at least one of the parameters indicated in 1) to 16) below. Note that the parameters indicated in 1) to 16) below may be parameters associated with a resource pool.
1) Slot index of PSCCH and/or PSSCH: A
2) Slot index of PSFCH: B
3) Gap of slots between PSFCH and immediately preceding A: K
4) Subchannel index of PSCCH and/or PSSCH: C
5) First PRB index in subchannel for transmitting PSFCH: D
6) Number of PRBs in subchannel transmitting PSFCH: F
7) Number of subchannels in resource pool: G
8) Number of PRBs in resource pool: H
9) Period of PSFCH: N
10) L1 source ID: P
11) L1 destination ID: Q
12) L1 ID (virtual ID) for terminal identification in group: R
13) L1 ID for group identification: T
14) Number of resources in code domain of PSFCH: S
15) Number of PRBs in subchannel m: E_m
16) First PRB index in subchannel m: D_m

As illustrated in FIG. 10, when the first PSCCH and PSSCH are arranged in a slot n, a PSFCH resource is determined by at least one of the following parameters: A={n, n+1, n+2, n+3}, B=n+4, C=0, D=0, E=8, F=2, and N=4. P is the L1 source ID and indicates the ID of the layer 1 of the transmitting terminal 20. Q is the L1 destination ID and indicates the ID of the layer 1 of the receiving terminal 20.

For example, the above parameters or a formula for deriving a PSFCH resource from the above parameters, may be different between option 2 of groupcast and option 1 of unicast and/or groupcast.

Further, the frequency domain of the PSFCH resource may be the same among PSFCHs corresponding to PSSCH of groupcast, and the code domain of the PSFCH resource may be different. For example, the method of determining the frequency domain of a PSFCH resource may be the same for option 2 of groupcast and option 1 of unicast and/or groupcast. For example, as the code domain of a PSFCH resource, with respect to a cyclic shift index Z, Z=R or Z=R mod S may be defined. Further, for example, as the code domain of a PSFCH resource, with respect to a cyclic shift index Z, Z=2×R or Z=R mod (S/2) may be defined. That is, an adjacent code domain resource may not be used, and a resource that is spaced apart may be used. Accordingly, it is possible to double the spacing between PSFCH resources in the code domain, to improve the reception properties. Further, for example, as the code domain of a PSFCH resource, with respect to a cyclic shift index Z, Z=Q or Z=Q mod S may be defined. Further, for example, as the code domain of a PSFCH resource, with respect to a cyclic shift index Z, Z=2×Q or Z=Q mod (S/2) may be defined. By using Q, even when R, which is a virtual ID, is unknown to the respective receiving terminals 20 belonging to the group, communication can be executed. Note that in the formula for obtaining Z above, "2" may be replaced by other values.

Further, the code domain of the PSFCH resource may be the same among PSFCHs corresponding to PSSCH of groupcast, and the frequency domain of PSFCH resources may be different. Further, both the frequency domain and the code domain of the PSFCH resource may differ among PSFCHs corresponding to PSSCH of groupcast.

Note that other methods similar to cyclic shift may be used for the code domain of PSFCH resources. For example, TD-OCC (Time Domain Orthogonal Cover Code) may be used or FD-OCC (Frequency Domain Orthogonal Cover Code) may be used in the coding domain of PSFCH resources.

Note that a different subchannel may be configured or reported for receiving and transmitting PSFCH, between option 2 of groupcast and option 1 of unicast and/or groupcast.

For example, when option 2 of groupcast is configured or reported, the number X of the receiving terminals 20 belonging to the group may be configured to less than or equal to the number Y of PSFCHs available for usage for a HARQ response corresponding to the PSSCH used in the groupcast. For example, when the number X of the receiving terminals 20 exceeds the number Y of PSFCHs, it may be considered that an error has occurred. That is, the terminal 20 does not need to assume a number X that exceeds Y. As another example, when the number X of the receiving terminals 20 exceeds the number Y of PSFCHs, some of the receiving terminals 20 do not need to transmit a HARQ response, or may delay a HARQ response, or may retransmit a HARQ response. The above-described "some of the receiving terminals 20" described above may be determined based on terminal IDs. As another example, the above-described "some of the receiving terminals 20" may be determined based on the distance between the transmitting terminal 20 and the receiving terminal 20, the number X of the receiving terminals 20 belonging to the group, and the number Y of PSFCHs available for usage for HARQ responses corresponding to the PSSCH used for groupcasting. That is, a threshold value with respect to the distance between the transmitting terminal 20 and the receiving terminal 20 for determining whether the HARQ response is to be enabled or disabled, may be changed based on X and Y. As another example, the above-described "some of the receiving terminals 20" may be determined based on a report from the transmitting terminal 20 or the base station 10. Note that the distance between terminals may mean an element obtained based on at least one piece of information such as a (sub) zone where each terminal is located, the path loss of transmission power between terminals, and a signal arrival time between terminals or between a terminal and a base station.

For example, when option 2 of groupcast is configured or reported, the number X of the receiving terminals 20 belonging to the group may be configured to less than or equal to a certain number Z. For example, the number Z may be configured or defined in advance. For example, when the number X of the receiving terminals 20 exceeds the number Z, it may be considered that an error has occurred. That is, the terminal 20 does not need to assume a number X that exceeds Z. As another example, when the number X of the receiving terminals 20 exceeds the number Z, some of the receiving terminals 20 do not need to transmit a HARQ response, or may delay a HARQ response, or may retransmit a HARQ response. The above-described "some of the receiving terminals 20" described above may be determined based on terminal IDs. As another example, the above-described "some of the receiving terminals 20" may be determined based on the distance between the transmitting terminal 20 and the receiving terminal 20, the number X of the receiving terminals 20 belonging to the group, and the number Z of PSFCHs available for usage for HARQ responses corresponding to the PSSCH used for groupcasting. As another example, the above-described "some of the receiving terminals 20" may be determined based on a report from the transmitting terminal 20 or the base station 10. Note that the distance between terminals may mean an element obtained based on at least one piece of information such as a subzone where each terminal is located, the path loss of transmission power between terminals, and a signal arrival time between terminals or between a terminal and a base station.

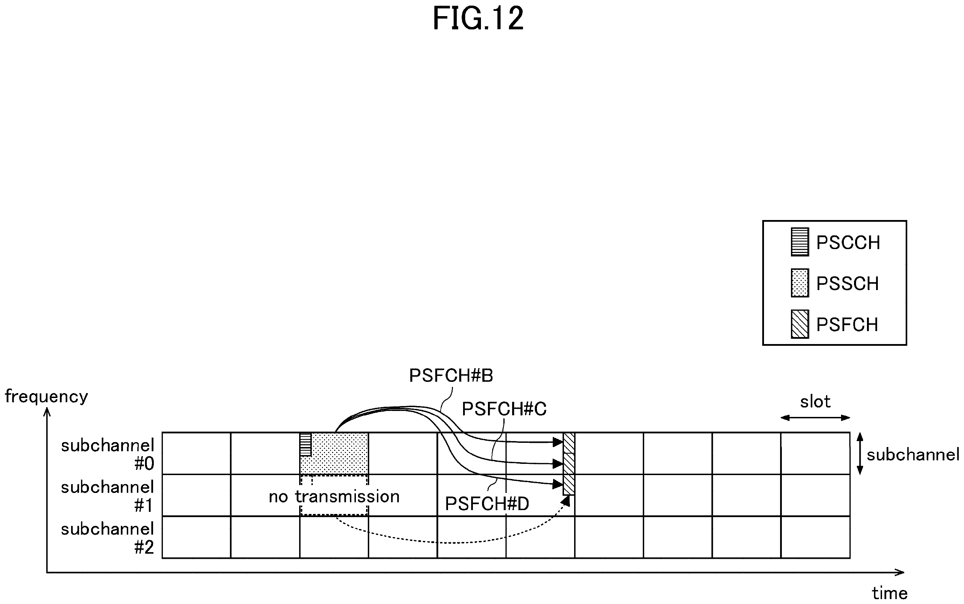

FIG. 12 illustrates an example (2) of a channel arrangement according to an embodiment of the present invention. When option 2 of groupcast is configured or reported, a resource associated with another PSSCH may be used for transmitting PSFCH corresponding to PSSCH and/or PSSCH of the groupcast.

The receiving terminal 20 may detect, by sensing, a PSFCH resource that is not used for another HARQ response. As illustrated in FIG. 12, when the UE#D, which is the receiving terminal 20, detects by sensing that PSCCH and/or PSSCH is not transmitted in a slot of subchannel #1, a resource corresponding to the detected PSSCH may be used to transmit PSFCH#D. When the UE#D, which is the receiving terminal 20, detects by sensing that PSCCH and/or PSSCH is not transmitted, and transmits PSFCH#D by using a resource corresponding to the detected PSSCH, the PSFCH resource of the subchannel #0 that is initially available for usage (i.e., in the example of FIG. 12, PSFCH#B and PSFCH#C) does not need to be changed. Here, sensing means, for example, decoding the SCI, measuring the signal power of a DMRS, etc.

Note that when the number X of the receiving terminals 20 belonging to the group exceeds the number Y of PSFCHs that are available for usage for a HARQ response corresponding to PSSCH used for groupcasting, the receiving terminal 20 may detect, by sensing, a PSFCH resource that is not used for another HARQ response, and use the detected PSFCH resource as an additional PSFCH resource.

For example, when option 2 for groupcast is configured or reported, and the number X of the receiving terminals 20 exceeds the number Y of PSFCHs, option 2 can be changed to option 1. At this time, the change in the option may be explicitly or implicitly reported from the transmitting terminal 20 to the receiving terminal 20, or from the receiving terminal 20 to the transmitting terminal 20. The transmitting terminal 20 and/or the receiving terminal 20 may additionally or alternatively apply the above-described change in option, to the transmitting and/or receiving of each groupcast.

According to the above embodiment, the transmitting terminal 20 and the receiving terminal 20 can configure a PSFCH resource for receiving or transmitting a HARQ response corresponding to PSSCH, based on a parameter of the resource pool. Further, in the case of option 2 where ACK or NACK is transmitted, the transmitting terminal 20 becomes capable of detecting a case where the HARQ response of groupcast is DTX, thereby improving the reliability of communication.

That is, in direct communication between terminals, a response relating to retransmission control can be appropriately transmitted and received.

### (Apparatus configuration)

Next, a functional configuration example of the base station 10 and the terminal 20 that execute the above-described processes and operations, will be described. The base station 10 and the terminal 20 include functions for implementing the above-described embodiments. However, each of the base station 10 and the terminal 20 may have only some of the functions of the embodiments.

### <Base station 10>

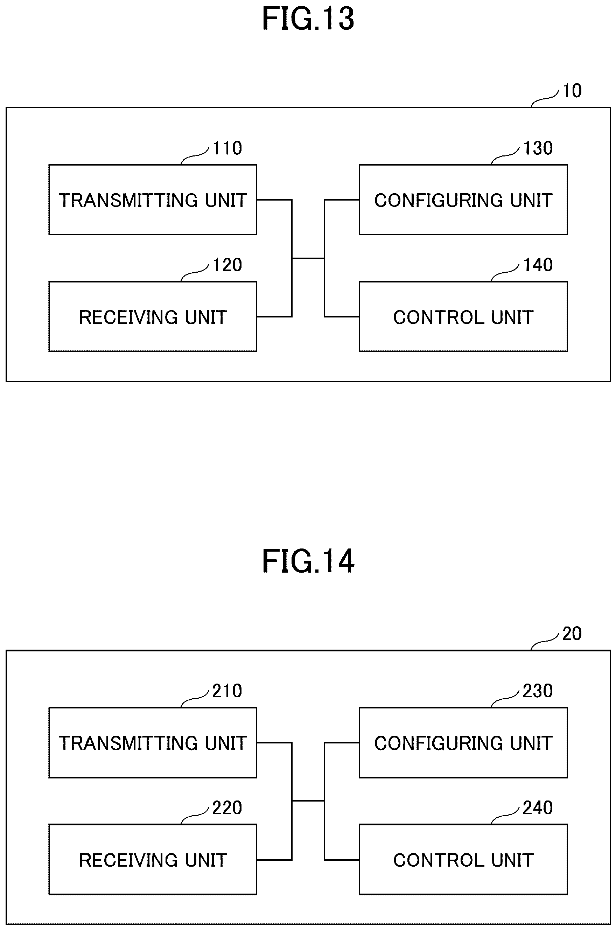

FIG. 13 is a diagram illustrating an example of a functional configuration of the base station 10. As illustrated in FIG. 13, the base station 10 includes a transmitting unit 110, a receiving unit 120, a configuring unit 130, and a control unit 140. The functional configuration illustrated in FIG. 13 is only an example. As long as the operations according to the embodiment of the present invention can be executed, the functional division and the name of the functional unit may be any functional division and name.

The transmitting unit 110 includes a function of generating signals to be transmitted to the terminal 20, and transmitting the signals in a wireless manner. The receiving unit 120 includes a function of receiving various signals transmitted from the terminal 20, and acquiring, for example, information of a higher layer from the received signals. Furthermore, the transmitting unit 110 has a function of transmitting NR-PSS, NR-SSS, NR-PBCH, DL/UL control signals, and DL reference signals, etc., to the terminal 20.

The configuring unit 130 stores pre-configured configuration information and various kinds of configuration information to be transmitted to the terminal 20, in a storage device, and reads these pieces of information from the storage device as necessary. The content of the configuration information is, for example, information related to configuring of D2D communication.

As described in the embodiment, the control unit 140 performs processing related to configurations for performing D2D communication by the terminal 20. Furthermore, the control unit 140 transmits the scheduling of D2D communication to the terminal 20 via the transmitting unit 110. A functional unit related to signal transmission in the control unit 140, may be included in the transmitting unit 110, and a functional unit related to signal reception in the control unit 140, may be included in the receiving unit 120.

### <Terminal 20>

FIG. 14 is a diagram illustrating an example of a functional configuration of the terminal 20. As illustrated in FIG. 14, the terminal 20 includes a transmitting unit 210, a receiving unit 220, a configuring unit 230, and a control unit 240. The functional configuration illustrated in FIG. 14 is only an example. As long as the operations according to the embodiment of the present invention can be executed, the functional division and the name of the functional unit may be any functional division and name.

The transmitting unit 210 creates transmission signals from the transmission data and wirelessly transmits the transmission signals. The receiving unit 220 wirelessly receives various kinds of signals and acquires signals of a higher layer from the received signals of the physical layer. Furthermore, the receiving unit 220 has a function of receiving NR-PSS, NR-SSS, NR-PBCH, and DL/UL/SL control signals or reference signals, etc., transmitted from the base station 10. Furthermore, for example, the transmitting unit 210 may transmit as D2D communication, to another terminal 20, PSCCH (Physical Sidelink Control Channel), PSSCH (Physical Sidelink Shared Channel), PSDCH (Physical Sidelink Discovery Channel), and PSBCH (Physical Sidelink Broadcast Channel), etc., and the receiving unit 220 may receive, from another terminal 20, PSCCH, PSSCH, PSDCH, or PSBCH, etc.

The configuring unit 230 stores various kinds of configuration information received from the base station 10 or the terminal 20, by the receiving unit 220, in a storage device, and reads these pieces of information from the storage device as necessary. Furthermore, the configuring unit 230 also stores pre-configured configuration information. The content of the configuration information is, for example, information related to configuring of D2D communication.

As described in the embodiment, the control unit 240 controls the D2D communication between the terminal 20 and another terminal 20. Furthermore, the control unit 240 performs a process related to HARQ of D2D communication. Further, the control unit 240 may perform scheduling of D2D communication to another terminal 20. A functional unit related to signal transmission in the control unit 240 may be included in the transmitting unit 210, and a functional unit related to signal reception in the control unit 240 may be included in the receiving unit 220.

### (Hardware configuration)

The block diagrams (FIGS. 13 and 14) used for describing the embodiment described above are of blocks of functional units. These functional blocks (constituent units) are implemented by any combination of at least one of hardware and software. Methods for implementing each functional block are not particularly limited. That is, each functional block may be implemented by using one device in which elements are physically or logically combined, or two or more devices physically or logically separated may be directly or indirectly (for example, in a wired manner, a wireless manner) connected to each other, and each functional block may be implemented by these plural devices. The functional blocks may be implemented by combining software with the above one device or a plurality of devices.

The functions include determining, deciding, judging, calculating, computing, processing, deriving, investigating, searching, confirming, receiving, transmitting, outputting, accessing, resolving, selecting, adopting, establishing, comparing, assuming, expecting, considering, broadcasting, notifying, communicating, forwarding, configuring, reconfiguring, allocating, mapping, assigning, etc.; however, the functions are not limited as such. For example, a function block (constituent unit) that implements the transmission function is referred to as a transmitting unit or a transmitter. In any case, as described above, the implementation method is not particularly limited.

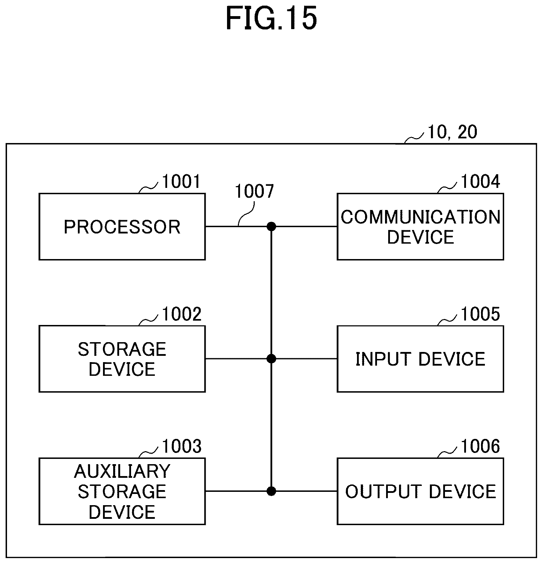

For example, the base station 10 and the terminal 20, etc., according to the embodiment of the present disclosure may function as a computer that performs processes of the radio communication method according to the present disclosure. FIG. 15 is a diagram illustrating an example of a hardware configuration of the base station 10 and the terminal 20 according to the embodiment of the present disclosure. The base station 10 and the terminal 20 described above may be formed as a computer apparatus physically including a processor 1001, a storage device 1002, an auxiliary storage device 1003, a communication device 1004, an input device 1005, an output device 1006, a bus 1007, etc.

Note that in the following description, the term "device" can be read as a circuit, a device, a unit. The hardware configuration of the base station 10 and the terminal 20 may be configured to include one or more devices illustrated in the figure, or may be configured to not include some of the devices.

The functions of the base station 10 and the terminal 20 are implemented by loading predetermined software (program) in hardware such as the processor 1001 and the storage device 1002, computing by the processor 1001, controlling communication by the communication device 1004, and controlling at least one of reading and writing of data in the storage device 1002 and the auxiliary storage device 1003.

The processor 1001 operates, for example, the operating system to control the entire computer. The processor 1001 may be formed of a central processing unit (CPU) including an interface with a peripheral device, a control device, an arithmetic device, and a register. For example, the above control unit 140 and the control unit 240, etc., may be implemented by the processor 1001.

Furthermore, the processor 1001 loads a program (program code), a software module, or data, etc., from at least one of the auxiliary storage device 1003 and the communication device 1004, into the storage device 1002, and executes various processes according to the program, the software module, or the data. As the program, a program for causing a computer to execute at least part of the operations described in the above embodiment is used. For example, the control unit 140 of the base station 10 illustrated in FIG. 13 may be implemented by a control program stored in the storage device 1002 and operating on the processor 1001. Furthermore, the control unit 240 of the terminal 20 illustrated in FIG. 14 may be implemented by a control program stored in the storage device 1002 and operating on the processor 1001. Although it has been described that the above-described various processes are executed by one processor 1001, the processes may be executed simultaneously or sequentially by two or more processors 1001. The processor 1001 may be implemented with one or more chips. Note that the program may be transmitted from the network via an electric communication line.

The storage device 1002 is a computer-readable recording medium and may be formed of at least one of a ROM (Read Only Memory), an EPROM (Erasable Programmable ROM), an EEPROM (Electrically Erasable Programmable ROM), and a RAM (Random Access Memory). The storage device 1002 may be referred to as a register, a cache, and a main memory, etc. The storage device 1002 can store executable programs (program codes), software modules, etc., for implementing the communication method according to the embodiment of the present disclosure.

The auxiliary storage device 1003 is a computer-readable recording medium, and may be formed of, for example, at least one of an optical disk such as a CD-ROM (Compact Disc ROM), a hard disk drive, a flexible disk, a magneto-optical disk (for example, a compact disk, a digital versatile disk, and a Blu-ray (registered trademark) disk), a smart card, a flash memory (for example, a card, a stick, and a key drive), a floppy (registered trademark) disk, and a magnetic strip, etc. The above-described storage medium may be, for example, a database including at least one of the storage device 1002 and the auxiliary storage device 1003, a server, or another appropriate medium.

The communication device 1004 is hardware (transmission/reception device) for performing communication between computers via at least one of a wired network and a wireless network, and is also referred to as a network device, a network controller, a network card, and a communication module, etc., for example. The communication device 1004 may be configured by including a high-frequency switch, a duplexer, a filter, a frequency synthesizer, etc., in order to implement at least one of frequency division duplex (FDD) and time division duplex (TDD). For example, a transmission/reception antenna, an amplifier unit, a transmitting/receiving unit, and a transmission line interface, etc., may be implemented by the communication device 1004. In the transmitting/receiving unit, the transmitting unit and the receiving unit may be physically or logically separated from each other.

The input device 1005 is an input device (for example, a keyboard, a mouse, a microphone, a switch, a button, and a sensor, etc.) that accepts input from the outside. The output device 1006 is an output device (for example, a display, a speaker, and an LED lamp, etc.) that performs output to the outside. Note that the input device 1005 and the output device 1006 may be integrated (for example, a touch panel).

Furthermore, the respective devices such as the processor 1001 and the storage device 1002 are connected by the bus 1007 for communicating information. The bus 1007 may be formed of a single bus or may be formed by using different buses between the devices.

Furthermore, the base station 10 and the terminal 20 may include hardware such as a microprocessor, a digital signal processor (DSP), an application specific integrated circuit (ASIC), a programmable logic device (PLD), and a field programmable gate array (FPGA), and a part of or all of the functional blocks may be implemented by the hardware. For example, the processor 1001 may be implemented by using at least one of these hardware elements.

### (Overview of embodiment)

As described above, according to the embodiment of the present invention, there is provided a terminal including a transmitting unit configured to transmit data to a plurality of other terminals via a physical shared channel arranged in a resource pool; a control unit configured to identify a resource in which a channel, which is used for transmitting and receiving a response relating to retransmission control corresponding to the data, is arranged; and a receiving unit configured to receive, from another terminal among the plurality of other terminals, the response relating to the retransmission control corresponding to the data, in the identified resource, wherein the control unit determines at least one terminal among the plurality of other terminals from which the response relating to the retransmission control is to be transmitted, in a case where the response relating to the retransmission control includes an affirmative response or a negative response and a number of the plurality of other terminals is greater than a number of the resources in which the channel is arranged.

With the above configuration, the transmitting terminal 20 and the receiving terminal 20 can configure a PSFCH resource for receiving or transmitting a HARQ response corresponding to PSSCH, based on a parameter of the resource pool. Further, in the case of option 2 where ACK or NACK is transmitted, the transmitting terminal 20 becomes capable of detecting a case where the HARQ response of groupcast is DTX, thereby improving the reliability of communication. That is, it is possible to appropriately transmit and receive a response related to retransmission control in direct communication between terminals.

The control unit may determine the at least one terminal among the plurality of other terminals from which the response relating to the retransmission control is to be transmitted, based on an identifier of each of the plurality of other terminals. With this configuration, it is possible to appropriately transmit and receive a response related to retransmission control in direct communication between terminals.

The control unit may determine the at least one terminal among the plurality of other terminals from which the response relating to the retransmission control is to be transmitted, based on a distance between an own terminal corresponding to the terminal and each of the plurality of other terminals. With this configuration, it is possible to appropriately transmit and receive a response related to retransmission control in direct communication between terminals.

The control unit may change a threshold value with respect to the distance between the own terminal, which determines the at least one terminal among the plurality of other terminals from which the response relating to the retransmission control is to be transmitted, and each of the plurality of other terminals, based on the number of the plurality of other terminals and the number of the resources in which the channel is arranged. With this configuration, it is possible to appropriately transmit and receive a response related to retransmission control in direct communication between terminals.

The control unit may identify a resource, which is associated with the physical shared channel that is detected by sensing as not being used for transmitting the data by the another terminal, as the resource in which the channel, which is used for transmitting and receiving the response relating to the retransmission control corresponding to the data, is arranged. With this configuration, it is possible to appropriately transmit and receive a response related to retransmission control in direct communication between terminals.

Further, according to the embodiment of the present invention, there is provided a terminal including a receiving unit configured to receive data from another terminal via a physical shared channel arranged in a resource pool; a control unit configured to identify a resource in which a channel, which is used for transmitting and receiving a response relating to retransmission control corresponding to the data, is arranged; and a transmitting unit configured to transmit, to the another terminal, the response relating to the retransmission control corresponding to the data, in the identified resource, wherein the control unit determines at least one terminal, among a plurality of other terminals, from which the response relating to the retransmission control is to be transmitted, in a case where the response relating to the retransmission control includes an affirmative response or a negative response and a number of terminals that are transmission destinations of the another terminal is greater than a number of the resources in which the channel is arranged.

With the above configuration, the transmitting terminal 20 and the receiving terminal 20 can configure a PSFCH resource for receiving or transmitting a HARQ response corresponding to PSSCH, based on a parameter of the resource pool. Further, in the case of option 2 where ACK or NACK is transmitted, the transmitting terminal 20 becomes capable of detecting a case where the HARQ response of groupcast is DTX, thereby improving the reliability of communication. That is, it is possible to appropriately transmit and receive a response related to retransmission control in direct communication between terminals.

### (Supplement of embodiment)

The embodiment of the present invention is described above; however the disclosed invention is not limited to the embodiment, and a person ordinarily skilled in the art will appreciate various variations, modifications, alternatives, replacements, and so forth. Specific examples of numerical values are used in the description in order to facilitate understanding of the invention. However, these numerical values are merely an example, and any other appropriate values may be used, except as indicated otherwise. The separations of the items in the above description are not essential to the present invention. Depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. The order of the processes in each of the processing procedures described in the embodiment may be re-arranged, provided that they do not contradict. For the convenience of description, the base station 10 and the terminal 20 are described by using the functional block diagrams; however, such devices may be implemented in hardware, software, or combinations thereof. The software to be executed by the processor included in the base station 10 in accordance with the embodiment of the present invention and the software to be executed by the processor included in the terminal 20 in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

Indication of information is not limited to the aspect or embodiment described in this disclosure and may be given by using any other method. For example, the notification of information may be given physical layer signaling (for example, Downlink Control Information (DCI), uplink control information (UCI)), higher layer signaling (for example, radio resource control (RRC) signaling, medium access control (MAC) signaling, broadcast information (master information block (MIB), system information block (SIB))), other signals, or a combination thereof. Further, the RRC signaling may be referred to as an "RRC message" and may be, for example, an RRC connection setup message, an RRC connection reconfiguration message, etc.

Each aspect and embodiment described in this disclosure is applicable to at least one of LTE, LTE-A, SUPER 3G, IMT-Advanced, 4G (4th generation mobile communication system), 5G (5th generation mobile communication system), NR(new Radio), future radio access (FRA), NR (New Radio), W-CDMA (registered trademark), GSM (registered trademark), CDMA2000, ultra-mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), and systems using any other appropriate systems and next generation systems expanded on the basis of the systems. Furthermore, each aspect and embodiment described in this disclosure may be applied to a combination of a plurality of systems (for example, a combination of at least one of LTE and LTE-A, and 5G, etc.)

The processing procedures, the sequences, the flowcharts, etc., of the respective aspects/embodiments described in this specification may be reversed in order unless there is a contradiction. For example, the method described in this disclosure presents elements of various steps in an exemplary order and is not limited to a presented specific order.

In the present specification, a specific action that is supposed to be performed by the base station 10 may be performed by an upper node in some cases. In the network configured with one or a plurality of network nodes including the base station 10, various actions performed for communication with the terminal 20 can be obviously performed by at least one of the base station 10 and any network node (for example, an MME or an S-GW, etc., is considered, but it is not limited thereto) other than the base station 10. The example in which the number of network nodes excluding the base station 10 is one has been described above, but the other network nodes may be a combination of a plurality of other network nodes (for example, an MME and an S-GW).

Information or signals, etc., described in the present disclosure can be output from the higher layer (or the lower layer) to the lower layer (or the higher layer). Information, etc., may be input/output via a plurality of network nodes.

Input and output information, etc., may be stored in a specific place (for example, a memory) or may be managed by using a management table. Input and output information, etc., may be overwritten, updated, or additionally written. Output information, etc., may be deleted. Input information, etc., may be transmitted to another device.

The determination according to the present disclosure may be performed in accordance with a value (0 or 1) indicated by one bit, may be performed in accordance with a Boolean value (true or false), or may be performed by a comparison of numerical values (for example, a comparison with a value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, etc., regardless of whether software is called software, firmware, middleware, a microcode, a hardware description language, or any other name.

Further, software, commands, information, etc., may be transmitted and received via a transmission medium. For example, when software is transmitted from a web site, a server, or any other remote source using at least one of a wired technology (a coaxial cable, a fiber optic cable, a twisted pair, or a digital subscriber line (DSL), etc.) and a wireless technology (infrared rays or a microwave, etc.), at least one of the wired technology and the wireless technology is included in a definition of a transmission medium.

Information, signals, etc., described in the present disclosure may be indicated using any one of a variety of different techniques. For example, data, instructions, commands, information, signals, bits, symbols, chips, etc., which are mentioned throughout the above description may be indicated by voltages, currents, electromagnetic waves, magnetic particles, optical fields or photons, or an arbitrary combination thereof.

The terms described in this disclosure and terms necessary for understanding this specification may be replaced with terms having the same or similar meanings. For example, at least one of a channel and a symbol may be a signal (signaling). Further, a signal may be a message. Further, a component carrier (CC) may be referred to as a "carrier frequency," a "cell," or a "frequency carrier", etc.

The terms "system" and "network" used in the present disclosure are used interchangeably.

Further, information, parameters, etc., described in the present disclosure may be indicated by using absolute values, may be indicated by using relative values from predetermined values, or may be indicated by using corresponding other information. For example, radio resources may be those indicated by an index.

The names used for the above-described parameters are not limited in any respect. Further, mathematical formulas, etc., using the parameters may be different from those explicitly disclosed in the present disclosure. Since various channels (for example, the PUCCH, the PDCCH, etc.) and information elements, etc., can be identified by suitable names, the various names allocated to the various channels and the information elements are not limited in any respect.

In the present disclosure, the terms "base station," "radio base station," "base station," "fixed station," "Node B," "eNodeB (eNB)," "gNodeB (gNB)," "access point," "transmission point," "reception point," "transmission/reception point," "cell," "sector," "sector group," "carrier," "component carrier" can be used interchangeably. The base station is also referred to as a macro cell, a small cell, a Femto cell, a pico cell, etc.

The base station can accommodate one or more (for example, three) cells. When the base station accommodates a plurality of cells, the entire coverage area of the base station can be divided into a plurality of smaller areas, and each smaller area can provide communication service through a base station subsystem (for example, a small indoor base station remote radio head (RRH)). The term "cell" or "sector" refers to part or all of the coverage area of at least one of the base station and the base station subsystem that performs communication service in the coverage.

In the present disclosure, terms such as "MS: Mobile Station", "user terminal", "UE: User Equipment", and "terminal", etc., can be used interchangeably.

The mobile station is also referred to as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or other appropriate terms.

At least one of the base station and the mobile station may be referred to as a transmission device, a reception device, a communication device, etc. Note that at least one of the base station and the mobile station may be a device mounted on a mobile body, the mobile body itself, etc. The mobile body may be a vehicle (for example, a car, an airplane, etc.), a mobile body that moves unmanned (for example, a drone, an automatically driven vehicle, etc.), or a robot (manned type or unmanned type). Note that at least one of the base station and the mobile station also includes a device which does not necessarily move during the communication operation. For example, at least one of the base station and the mobile station may be an IoT (Internet of Things) device such as a sensor.

Furthermore, the base station in the present disclosure may be read as a user terminal. For example, the communication between the base station and the user terminal is replaced with communication (for example, may be referred to as D2D (Device-to-Device), V2X (Vehicle-to-Everything)) between a plurality of the terminals 20, and each aspect/embodiment of the present disclosure may be applied to the configuration after replacement. In this case, the terminal 20 may have the functions of the base station 10 described above. Furthermore, terms such as "uplink" and "downlink" may also be read as terms corresponding to inter-terminal communication (for example, "side"). For example, uplink channels, downlink channels, etc., may be read as side channels.

Similarly, the user terminal in the present disclosure may be read as a base station. In this case, the base station may include the functions of the above-described user terminal.

In some cases, the terms "determining" and "deciding" used in the disclosure include various operations. The terms "determining" and "deciding" can include, for example, "determination" and "decision" for judging, calculating, computing, processing, deriving, investigating, looking-up, or search inquiry (for example, looking-up in a table, a database, or other data structures), and ascertaining operations. In addition, the terms "determining" and "judging" can include "determination" and "decision" for receiving (for example, information reception), transmitting (for example, information transmission), input, output, and accessing (for example, accessing data in a memory) operations. The terms "determining" and "judging" can include "determination" and "decision" for resolving, selecting, choosing, establishing, and comparing operations. That is, the terms "determining" and "judging" can include "determination" and "decision" for any operation. Furthermore, "determining (deciding)" may be read as "assuming", "expecting", and "considering".

The terms "connected" and "coupled" or all of the modifications of the terms mean all of direct and indirect connections or couplings between two or more elements and can include a case in which one or more intermediate elements are present between two "connected" or "coupled" elements. The coupling or connection between elements may be physical coupling or connection, logical coupling or connection, or a combination thereof. For example, "connect" may be read as "access". In the disclosure, it can be considered that two elements are "connected" or "coupled" to each other by using one or more electric wires, at least one of a cable and a printed electrical connection and by using electromagnetic energy with a wavelength in a radio frequency domain, a microwave domain, and an optical (both visible and invisible) domain as some non-restrictive and incomprehensive examples.

The reference signal can be abbreviated to RS and may be called a pilot signal according to the standard to be applied.

In the present disclosure, the term "on the basis of" used in the specification does not mean "on the basis of only" unless otherwise stated. In other words, the term "on the basis of" means both "on the basis of only" and "on the basis of at least".

In the present disclosure, any reference to elements with the names "first" and "second" used in the specification does not generally limit the number of elements or the order of the elements. These names can be used as a convenient method for distinguishing two or more elements in the disclosure. Therefore, a reference to the first and second elements does not mean that only two elements can be used or that the first element needs to precede the second element in some form.

The term "means" in the structure of each of the above-mentioned devices may be substituted with, for example, a "unit", a "circuit", or a "device".

In the present disclosure, when "include," "including," and modifications thereof are used, these terms are intended to be inclusive, similarly to the term "comprising". In addition, the term "or" used in the present disclosure does not mean exclusive OR.

The radio frame may be formed of one or more frames in the time domain. In the time domain, each of the one or more frames may be referred to as a subframe. The subframe may further include one or more slots in the time domain. The subframe may be a fixed time length (for example, 1 ms) independent of the numerology.

The numerology may be a communication parameter applied to at least one of transmission and reception of a certain signal or channel. The numerology may indicate at least one of, for example, a subcarrier spacing (SCS), a bandwidth, a symbol length, a cyclic prefix length, a transmission time interval (TTI), a number of symbols per TTI, a radio frame configuration, a particular filtering process performed in the frequency domain by the transceiver, a specific windowing process performed in the time domain by the transceiver, etc.

A slot may be formed of one or more symbols (OFDM (Orthogonal Frequency Division Multiplexing) symbol, SC-FDMA (Single Carrier Frequency Division Multiple Access) symbol, etc.) in the time domain. The slot may be a time unit based on the numerology.

A slot may include a plurality of minislots. Each minislot may be formed of one or more symbols in the time domain. Furthermore, the minislot may be referred to as a subslot. A minislot may be formed of fewer symbols than a slot. The PDSCH (or PUSCH) transmitted in units of time greater than the minislots, may be referred to as PDSCH (or PUSCH) mapping type A. The PDSCH (or PUSCH) transmitted using minislots may be referred to as PDSCH (or PUSCH) mapping type B.

Radio frames, subframes, slots, minislots, and symbols all represent time units for transmitting signals. Radio frames, subframes, slots, minislots, and symbols may respectively be referred to by different names.

For example, one subframe may be referred to as a transmission time interval (TTI), or a plurality of consecutive subframes may be referred to as a TTI, or one slot or one minislot may be referred to as a TTI. That is, at least one of a subframe and TTI may be a subframe (1 ms) in existing LTE, a period shorter than 1 ms (for example, 1-13 symbols), or a period longer than 1 ms. Note that the unit representing TTI may be referred to as a slot, a minislot, etc., instead of a subframe.

Here, the TTI refers to the minimum time unit of scheduling in radio communication, for example. For example, in the LTE system, the base station performs scheduling for allocating radio resources (frequency bandwidth, transmission power, etc., that can be used in each terminal 20) in units of TTIs, to each terminal 20. Note that the definition of TTI is not limited as such.

The TTI may be a transmission time unit such as a channel coded data packet (transport block), a code block, a codeword, etc., or may be a processing unit such as scheduling, link adaptation, etc. Note that when a TTI is given, a time interval (for example, the number of symbols) in which a transport block, a code block, a code word, etc., is actually mapped, may be shorter than the TTI.

Note that when one slot or one minislot is referred to as a TTI, one or more TTIs (i.e., one or more slots or one or more minislots) may be the minimum time unit of scheduling. Also, the number of slots (the number of minislots) constituting the minimum time unit of the scheduling, may be controlled.

A TTI having a time length of 1 ms may be referred to as a regular TTI (TTI in LTE Rel. 8-12), a normal TTI, a long TTI, a regular subframe, a normal subframe, a long subframe, a slot, etc. A TTI shorter than the regular TTI may be referred to as a reduced TTI, a short TTI, a partial or fractional TTI, a reduced subframe, a short subframe, a minislot, a subslot, a slot, etc.

Note that a long TTI (for example, a regular TTI, a subframe, etc.) may be read as a TTI having a time length exceeding 1 ms, and a short TTI (for example, a reduced TTI, etc.) may be read as a TTI having a TTI length that is less than the TTI length of the long TTI and greater than or equal to 1 ms.

The resource block (RB) is a resource allocation unit in the time domain and the frequency domain, and may include one or more consecutive subcarriers in the frequency domain. The number of subcarriers included in the RB may be the same irrespective of the numerology, for example, the number may be 12. The number of subcarriers included in the RB may be determined based on the numerology.

Furthermore, the time domain of the RB may include one or more symbols, and may have a length of one slot, one minislot, one subframe, or one TTI. Each TTI, each subframe, etc., may be formed of one or more resource blocks.

Note that one or more RBs may be referred to as a physical resource block (PRB), a subcarrier group (SCG: Sub-Carrier Group), a resource element group (REG: Resource Element Group), a PRB pair, and an RB pair, etc.

Furthermore, the resource block may be formed of one or more resource elements (RE). For example, the one RE may be a radio resource area of one subcarrier and one symbol.

A bandwidth part (BWP) (which may be referred to as partial bandwidth) may represent a subset of consecutive common resource blocks (RBs) for a certain numerology, in a certain carrier. Here, the common RB may be identified by the index of the RB based on the common reference point of the carrier. The PRB may be defined by a certain BWP and numbered in the BWP.

The BWP may include BWP for UL (UL BWP) and BWP for DL (DL BWP). For the terminal 20, one or more BWPs may be configured within one carrier.

At least one of the configured BWPs may be active, and the terminal 20 does not have to assume transmitting and receiving predetermined signals/channels outside of the active BWP. Note that a "cell", a "carrier", etc., in the present disclosure may be read as "BWP".

Structures such as the radio frames, subframes, slots, minislots, and symbols described above are merely illustrative. For example, configurations such as the number of subframes included in the radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, etc., may be variously changed.

In the present disclosure, if an article is added by translation, such as a, an, the, etc., in English, the present disclosure may include a case where the noun following the article is plural.

In the present disclosure, the term "A and B are different" may mean "A and B are different from each other". Note that this term may mean "A and B are each different from C". Terms such as "separated", "coupled", etc., may also be interpreted in the same manner as "different".

Each aspect/embodiment described in the present disclosure may be used singly or in combination, or may be used by being switched in accordance with the execution. Furthermore, reporting of predetermined information (for example, reporting "being X") is not limited to being reporting explicitly; this may be done implicitly (for example, not reporting the predetermined information).

Note that in the present disclosure, the HARQ response is an example of response relating to retransmission control. PSSCH is an example of a physical shared channel. PSFCH is an example of a channel used for transmitting and receiving a response relating to retransmission control. PSCCH is an example of a physical control channel.

Although the present disclosure has been described in detail above, it will be obvious to those skilled in the art that the present disclosure is not limited to the embodiments described herein. The present disclosure can be implemented as modifications and variations without departing from the spirit and scope of the present disclosure as defined by the scope of the claims. Therefore, the description of the present disclosure is for the purpose of illustration and does not have any restrictive meaning to the present disclosure.

### [Reference Signs List]

- 10: base station
- 110: transmitting unit
- 120: receiving unit
- 130: configuring unit
- 140: control unit
- 20: terminal
- 210: transmitting unit
- 220: receiving unit
- 230: configuring unit
- 240: control unit
- 1001: processor
- 1002: storage device
- 1003: auxiliary storage device
- 1004: communication device
- 1005: input device
- 1006: output device

## Claims

1. A terminal comprising:
a transmitting unit configured to transmit data to a plurality of other terminals via a physical shared channel arranged in a resource pool;
a control unit configured to identify a resource in which a channel, which is used for transmitting and receiving a response relating to retransmission control corresponding to the data, is arranged; and
a receiving unit configured to receive, from another terminal among the plurality of other terminals, the response relating to the retransmission control corresponding to the data, in the identified resource, wherein
the control unit determines at least one terminal among the plurality of other terminals from which the response relating to the retransmission control is to be transmitted, in a case where the response relating to the retransmission control includes an affirmative response or a negative response and a number of the plurality of other terminals is greater than a number of the resources in which the channel is arranged.

2. The terminal according to claim 1, wherein the control unit determines the at least one terminal among the plurality of other terminals from which the response relating to the retransmission control is to be transmitted, based on an identifier of each of the plurality of other terminals.

3. The terminal according to claim 1, wherein the control unit determines the at least one terminal among the plurality of other terminals from which the response relating to the retransmission control is to be transmitted, based on a distance between the terminal and each of the plurality of other terminals.

4. The terminal according to claim 3, wherein the control unit changes a threshold value with respect to the distance between the terminal, which determines the at least one terminal among the plurality of other terminals from which the response relating to the retransmission control is to be transmitted, and each of the plurality of other terminals, based on the number of the plurality of other terminals and the number of the resources in which the channel is arranged.

5. The terminal according to claim 1, wherein the control unit identifies a resource, which is associated with the physical shared channel that is detected by sensing as not being transmitted, as the resource in which the channel, which is used for transmitting and receiving the response relating to the retransmission control corresponding to the data, is arranged.

6. A terminal comprising:
a receiving unit configured to receive data from another terminal via a physical shared channel arranged in a resource pool;
a control unit configured to identify a resource in which a channel, which is used for transmitting and receiving a response relating to retransmission control corresponding to the data, is arranged; and
a transmitting unit configured to transmit, to the another terminal, the response relating to the retransmission control corresponding to the data, in the identified resource, wherein
the control unit determines at least one terminal, among one or more terminals that are transmission destinations of the data, from which the response relating to the retransmission control is to be transmitted, in a case where the response relating to the retransmission control includes an affirmative response or a negative response and a number of the one or more terminals that are the transmission destinations of the data is greater than a number of the resources in which the channel is arranged.
